# EUROPEAN PATENT SPECIFICATION

(11) **EP 0 725 343 B1**
(45) Date of publication and mention of the grant of the patent: **10.04.2002**
(21) Application number: 95650005.2
(22) Date of filing: 02.03.1995
(51) Int. Cl.: G06F 11/00, G06F 11/14

(54) **Error prevention in computer systems**
Fehlervorbeugung in Rechnersystemen
Prévention d'erreur dans des systèmes d'ordinateur

(30) Priority: 01.02.1995 IE 9581
(43) Date of publication of application: 07.08.1996
(73) Proprietor: Fanning, Darragh, Skerries, County Dublin (IE)
(72) Inventor: Fanning, Darragh, Skerries, County Dublin (IE)
(74) Representative: O'Brien, John Augustine

(56) References cited:
- EP-A- 0 319 034
- EP-A- 0 590 866
- EP-A- 0 618 534

## Description

The invention relates to error prevention in computer systems, and particularly for functional units for performing specific low-level tasks. Examples of such tasks are:-
filtering data records;
filtering data access requests;
deleting data records;
appending data records.

The invention relates particularly to monitoring of events which are implemented by such functional units so that faults may be detected and suitable recovery made when required. The invention also relates to a manner of generating the functional unit initially so that errors can be prevented.

Heretofore, various general fault-detection systems have been developed. For example, British Patent Specification No. GB 2,276,737A describes a method of transaction-orientated data processing in which operation requests or data packets may be marked to be excluded from the effects of application-requested backouts. Such backouts are made following discovery of an error condition prior to successful completion of a transaction which should be atomic. While this method appears to be quite useful, the present invention is directed towards providing for functionality control at a more "fine-grained" level to prevent as much as possible and to handle faults which arise in data processing.

The document EP-A-0 319 034 discloses a method of recovering failure of online control program in a multi processor processing system, where each processor execute its own online control program, by means of a take-over process making use of taking-over information stored in a common storage.

According to the invention, there is provided an error prevention method carried out in a computer system comprising a plurality of functional units stored in a non-volatile memory device and having code to direct low-level system operations, the system also comprising a control means for error prevention, characterised in that said control means comprises a plurality of control units and an initialisation unit, and the method comprises the steps of a control unit:-
storing codes which associate it in a one-to-one relationship with a particular functional unit;
receiving an activation instruction for the associated functional unit;
automatically verifying hardware initialisation parameters associated with a functional unit activation request received from a user interface by reference to a set of reference hardware circuit parameters stored in a data set;
automatically verifying the source of a request for activation of the associated functional unit by reference to a stored data set of access parameters;
activating the associated functional unit only after automatically performing a rollback operation having the following sub-steps:-
   reading entries in a fault control log to determine if all events implemented by the previously operational functional unit have a stored commit flag indicating that an event set has been implemented in an atomic manner; and re-activating the previously-activated functional unit if all commit flags are not detected;
updating the fault control log during operation of its associated functional unit by monitoring data event implementation and by :-
   determining if an event is correctly implemented and directing retries if not,
   setting a flag in an event log if an event is correctly implemented,
   determining when all events of an event set are complete,
   setting a flag in the fault control log when the event set is complete; and
   activating a next functional unit which is in a verified operational sequential order from the associated functional unit.

In one embodiment, each control unit determines when all events of an event set are complete by monitoring the value of a counter in the event log, said counter being incremented upon successful implementation of each event.

Preferably, each control unit automatically detects a system fault before a next functional unit is activated.

In another embodiment, each control unit automatically retrieves a commitment boundary and re-activates a sequence of previously-operated functional units for system fault rollback according to the commitment boundary.

In a still further embodiment, each control unit automatically generates an error signal for an output interface if an event is not correctly implemented and it stores code indicating that an retry is not allowed.

In another embodiment, the initialisation unit generates a functional unit by automatic conversion of a generic functional unit including instruction and textual references to a dummy file, conversion being carried out by automatic deletion of such references and insertion of specific file references using text processing steps.

Preferably, flag settings for the event log are connected to the input of a logic gate for outputting a fault log setting command when a flag is set for all events of an event set.

The invention will be more clearly understood from the following description of some embodiments thereof, given by way of example only, with reference to the accompanying drawings, in which :-
Fig. 1 is a schematic representation of interconnection of control and functional units in a computer system;
Figs. 2(a), 2(b) and 2(c) are flow diagrams illustrating operation of a control unit; and
Fig. 3 is a diagrammatic representation of the structure of a functional unit and the manner in which it is generated.

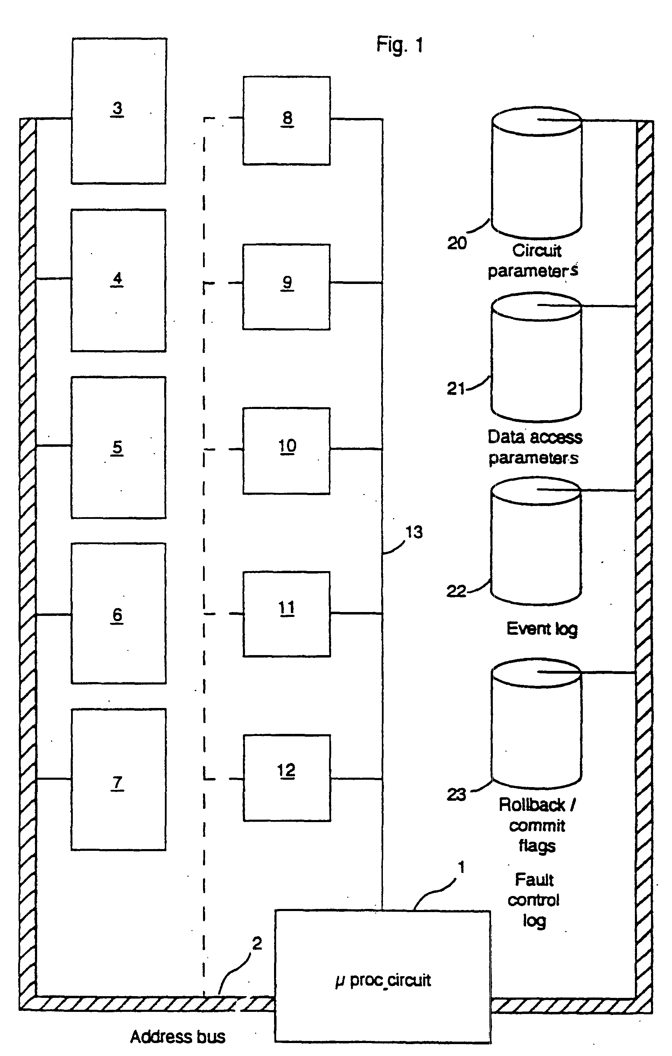

Referring to the drawings, and initially to Fig. 1 there is shown part of a computer system. A microprocessor circuit 1 is illustrated and this is of the type connected in an IBM AS/400™ minicomputer. A 32 bit wide address bus 2 is connected to the microprocessor circuit 1. The address bus 2 is connected to a set of five functional units 3 - 7. Construction of the functional units depends on the nature of the functions carried out by the particular unit. These are to carry out low level operations within a computer system such as a minicomputer. The functions are at the operating system level and lie underneath any application software which is loaded in the computer system. The functional units are implemented in software code and accordingly the connections shown are logical rather than physical. The type of functions which can be carried out by the functional units 3 - 7 include :-
filtering data access instructions and managing such instructions generally for data access security;
deleting records from data files under control of application software;
generating display screen commands;
updating existing records; and
creating records in data files.

The invention provides a set of control units 8 - 12, each of which is connected to a functional unit 3 - 7 in a one-to-one relationship by the microprocessor circuit 1 as illustrated by the conductor 13. The purpose of each control unit 8 - 12 is to control operation of the associated one of the functional units 3 - 7 so that access to data may be controlled, faults may be detected and the necessary recovery operations implemented to avoid a chain-effect in which faults propagate. How this is achieved is described below.

The control units 8 - 12 are connected to non-volatile memory blocks including a hardware circuit parameter data set 20, a data access parameter data set 21, an event log 22, and a fault control log 23. As described below, the combination of operation of the control units 8 - 12 and of the functional units 3 - 7 with reference to the various data sets and logs provides for early detection of faults and prevention of fault propagation.

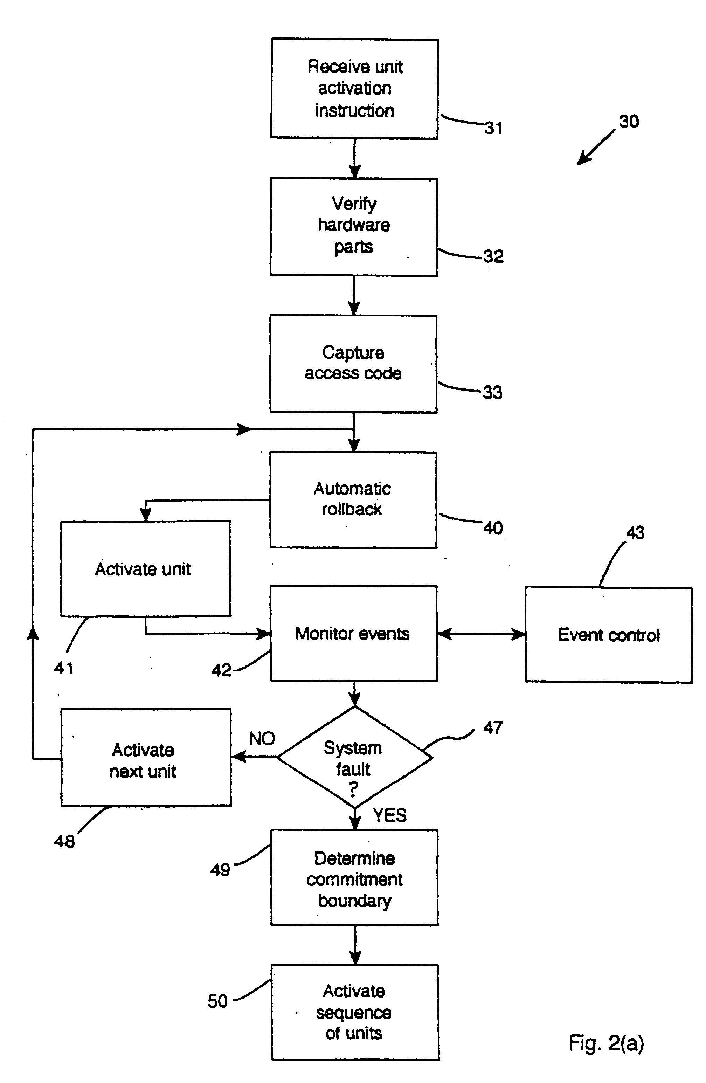

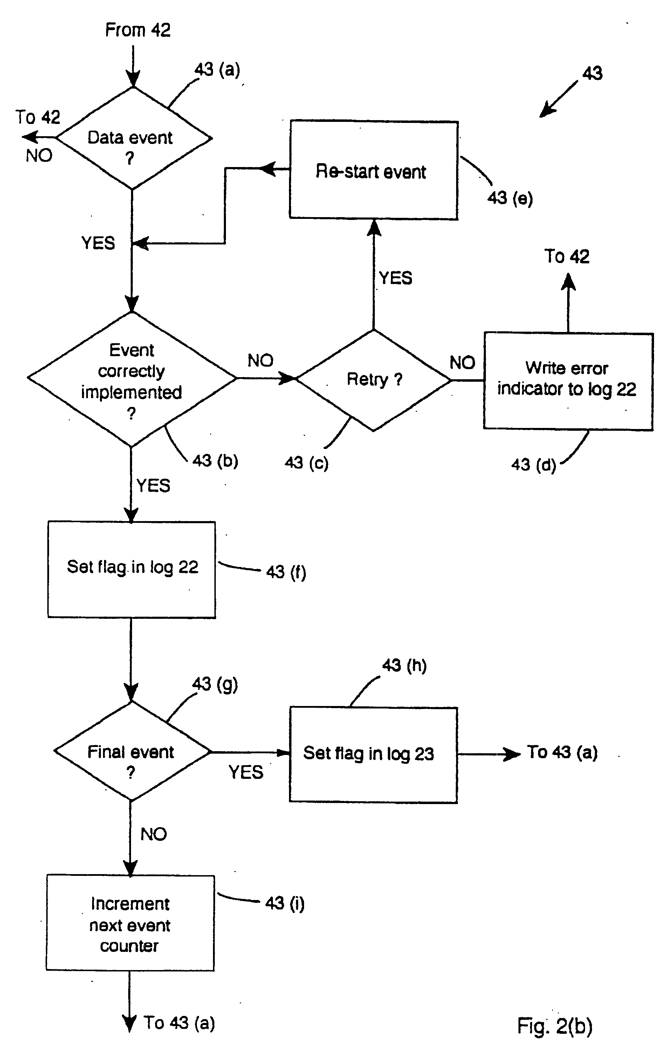

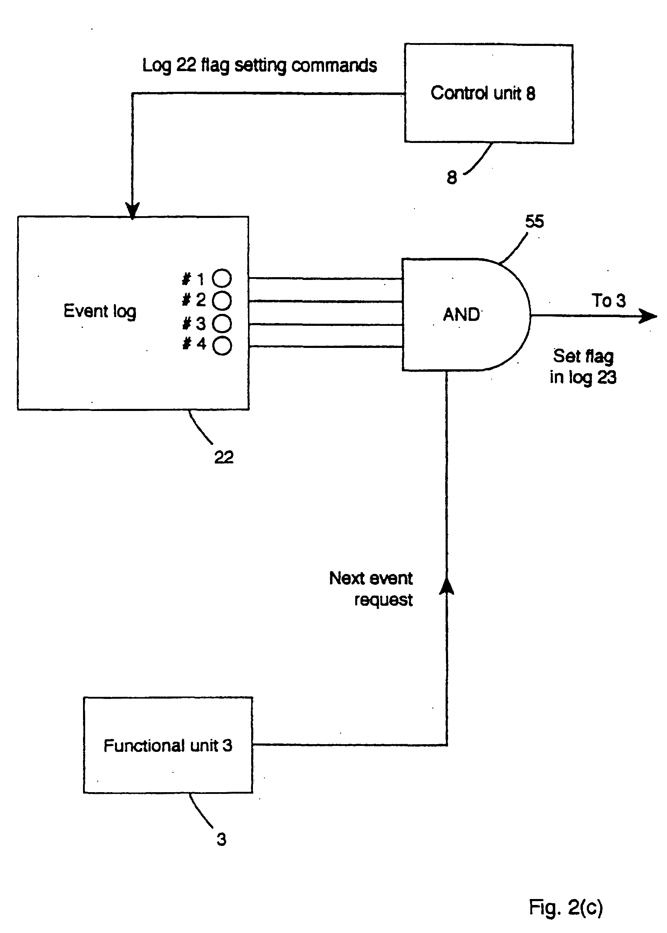

Referring now to Fig. 2, the manner in which the control units 8 -12 operate is now described in more detail. Although not shown in Fig. 1, there are various user interfaces such as terminals connected to the microprocessor circuit 1 and these interfaces transmit functional unit activation instructions as indicated by the numeral 31. Such an instruction is detected by the associated control unit 8. For clarity, the following description refers to the functional unit 3 and its associated control unit 8. The control unit 8 detects the activation instruction for the functional unit 3 and automatically verifies initialisation of the hardware parts necessary to operate under control of the functional unit 3. The control unit 8 achieves this by automatic reference to the hardware circuit data set 20 in which the model number, speed, and processor type of the interface and any interconnected processors is verified to ensure that there is no incompatibility. Attempts to use an inadequate or incorrect hardware specification when implementing an instruction are not allowed.

In step 33, the control unit 8 captures the access code which is being used and this is automatically verified by reference to the data access data set 21. Step 33 is important as it identifies the personal user which establishes the connection and in combination with the verification step 32 provides for comprehensive access control.

In step 41 the control unit 8 activates the associated functional unit 3 to perform the particular task, say appending a record to a data file. However, before the control unit 8 allows the functional unit 3 to implement any steps, it performs automatic rollback in step 40 by reference to rollback/commit flags written to the fault control log 23. This automatic rollback operation will be described in more detail below. Provided there are no problems, in step 42 the control unit 8 allows the functional unit 3 to perform the various operations which are involved in its functional operation and it monitors events. The control unit 8 automatically detects data events such as the writing of a byte of data to a non-volatile storage device or to read/write memory. This is achieved by monitoring Write Enable status settings on memory control lines.

A step which is carried out by the control unit 8 in tandem with the event monitoring step 42 is an event control step 43 illustrated in detail in Fig. 2(b). In step 43(a) the control unit 8 determines if an event is a data event. A data event is one which may affect data integrity. It does not include the reading of data as this latter event cannot change the data. In step 4(b), the control unit 8 determines if the functional unit 3 has correctly carried out the particular event. This may be the writing of a record to a file, or the writing of an item of data to a record. If it has not been carried out correctly, the control unit 8 includes code which indicates whether or not a retry should be carried out as indicated by the decision step 43(c). If there should be no retry, an error indicator is written to the log 22 in step 43(d). The event is re-started by the step 43(e) if a retry is allowed.

When the event has been correctly implemented, the control unit 8 sets a flag in the log 22 to indicate this fact. This is indicated by the step 43(f). In step 43(g), the control unit 8 refers to a counter in the log 22 to determine if the event is the final event in an event set. An event set is defined as a group of events which together perform a particular atomic operation or transaction. For example, the event set for appending a data record includes the events of writing the data record, updating the relevant file header, and also updating the file allocation table of the non-volatile memory device. If it is the final event, a flag indicating that the complete event set has been implemented is written to the log 23 in step 43(h). If it is not the final event, in step 43(i), the counter in the log 22 is incremented.

A circuit which is used under the control of the control unit 8 and the functional unit 3 to carry out the latter sub-steps of step 43 is shown in Fig. 2(c). In the event log 22, there are four flags #1, #2, #3 and #4 for an event set. These flags are set by flag setting commands from the control unit 8 as a result of step 43(f). When all four flags have been set, an AND gate 55 may transmit a signal setting the event set flag in the log 23. Further, the signal enables the next event, if requested in a signal from the functional unit 3.

In addition to writing a commit flag for the complete event set to the fault log 23, it is envisaged that the control unit 8 may also write such a flag to the event log 22. This would provide a double record of performance of atomic transactions.

For clarity, the example given above is extremely simple, however, the individual event may be at a much lower level than the full writing of a record to a file. Each individual event may be the successful writing of a byte of information to a file.

Another important aspect of operation of the control unit 8 is that it monitors system faults as indicated by the step 47 in Fig. 2(a). Such faults are quite serious as they may relate to a breakdown in communications between parts of the computer system, disk read errors, or corruption of data. Such monitoring takes place between operation of different functional units in an automatic manner. Provided no such faults are detected, the control unit 8 activates the next functional unit 4,5,6 or 7 depending on the necessary sequence of operations. This is indicated by the step 48 and when the next functional unit is activated, it performs automatic rollback as indicated by the step 40. This automatic rollback step is very important as it involves the control unit which is associated with the next functional unit automatically reading the fault control log 23 to determine if there is a commit flag for all of the event sets performed by the previous functional unit. This rollback operation is performed automatically by the associated control unit whenever a new functional unit is to be activated. This is very important in helping to ensure that faults do not propagate through the computer system. Operation of the control units in conjunction with the functional units in this matter provides a simple method for ensuring that all operations (event sets) are atomic and faults do not propagate.

If a system fault is detected as indicated by the step 47, in step 49 the control unit associated with the functional unit which is currently activated automatically determines the commitment boundary. The commitment boundary is also recorded in the fault control log 23 and it provides the boundary of how far back the control unit can trace the previous functional units which have been activated so that processing may be re-started. For example, if the functional units 4,5 and 7 have been activated and the next functional unit is the unit 3, the control unit 8 can trace back the history of operation of each of the previous three functional units and direct re-activation of the functional unit 4, provided this falls within the commitment boundary. In step 50, the relevant control unit activates a sequence of functional units to re-start processing. Accordingly, each control unit is constructed for both monitoring and fault control of its associated functional unit in a very objective manner and also for activation of other units for earlier processing stages.

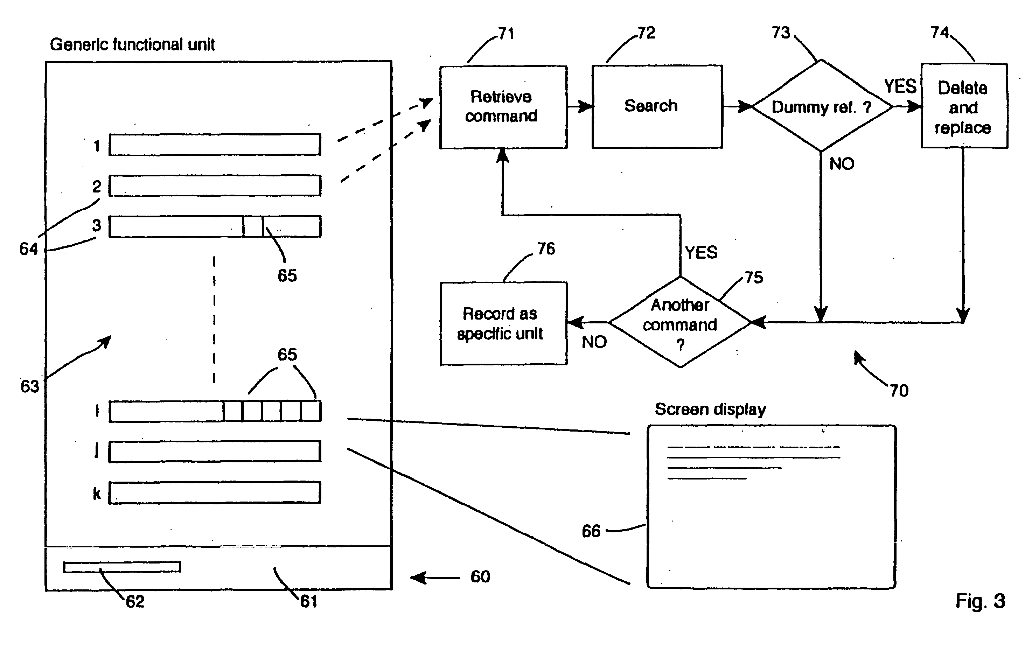

Another aspect of the invention is the manner in which the functional units 3 to 7 are initially generated. This method is indicated by the numeral 70 in Fig. 3 and it is carried out by an initialisation unit within the system with reference to a generic functional unit 60. The generic functional unit 60 includes access codes 61 including an address 62. The unit 60 also has a command set 63 having individual commands 64. In this embodiment, there are k commands 64, commands 1,2,3 and i,j,k being illustrated diagrammatically. Within the commands 64, there may be references 65 to a dummy file. These take the form of two different types. The type of reference 65 included in the command 3 is an instruction command, whereas that included in the command i is for display of text.

The generic functional unit 60 is comprehensively tested initially by inputting an extensive range of test instructions and monitoring the outputs which are generated. The method 70 is carried out to convert the generic functional unit 60 to a specific unit which may be used for a particular task. In step 71 the initialisation unit retrieves a first command and searches it in step 72 using conventional text searching techniques. This is possible because there is a set of pre-defined mnemonics which are used for references to dummy files and which could not be confused with other instructions within the commands 64. If a dummy file reference is detected as indicated by the decision step 73, in step 74 the reference is deleted and is replaced by an equivalent reference to a specific file. Steps 71,72,73 and 74 are repeated for each additional command as indicated by the step 75 and when all commands have been processed in this manner, the microprocessor circuit 1 records data indicating that there is now a specific functional unit having a particular function. A control unit is then linked to the functional unit.

The method 70 is carried out in a simple manner using text searching techniques and is therefore very efficient. Further, the specific functional unit which is generated has been thoroughly tested and no re-testing is required. This development helps to prevent errors arising during operation of the computer system.

It will be appreciated that the invention provides for control of functional units in a simple manner whereby faults may be detected early and propagation of faults avoided. It also provides for effective monitoring of the events carried out by the functional units.

The invention is not limited to the embodiments hereinbefore described, but may be varied in construction and detail.

## Claims

1. An error prevention method carried out in a computer system comprising a plurality of functional units (3-7) stored in a non-volatile memory device and having code to direct low-level system operations, the system also comprising a control means for error prevention, **characterised in that** said control means comprises a plurality of control units (8-12) and an initialisation unit, and the method comprises the steps of a control unit:-
storing codes which associate it in a one-to-one relationship with a particular functional unit;
receiving (31) an activation instruction for the associated functional unit;
automatically verifying (32) hardware initialisation parameters associated with a functional unit activation request received from a user interface by reference to a set (20) of reference hardware circuit parameters stored in a data set;
automatically verifying (33) the source of a request for activation of the associated functional unit by reference to a stored data set (21) of access parameters;
activating (41) the associated functional unit only after automatically performing a rollback operation (40) having the following sub-steps:-
reading entries in a fault control log (23) to determine if all events implemented by the previously operational functional unit have a stored commit flag indicating that an event set has been implemented in an atomic manner; and
re-activating the previously-activated functional unit if all commit flags are not detected;
updating the fault control log during operation of its associated functional unit by monitoring (42) data event implementation and by :-
determining (43(b)) if an event is correctly implemented and directing retries if not,
setting (43(f)) a flag in an event log (22) if an event is correctly implemented,
determining (43(g)) when all events of an event set are complete, and
setting (43(h)) a flag in the fault control log when the event set is complete; and
activating (48) a next functional unit which is in a verified operational sequential order from the associated functional unit.

2. A method as claimed in claim 1 wherein each control unit determines when all events of an event set are complete by monitoring the value of a counter in the event log (22), said counter being incremented upon successful implementation of each event.

3. A method as claimed in any preceding claim wherein each control unit automatically detects (47) a system fault before a next functional unit is activated.

4. A method as claimed in claim 3, wherein each control unit automatically retrieves a commitment boundary (49) and re-activates a sequence of previously-operated functional units for system fault rollback according to the commitment boundary.

5. A method as claimed in claim 4, wherein each control unit automatically generates (43(d)) an error signal for an output interface if an event is not correctly implemented and it stores code indicating that a retry is not allowed.

6. A method as claimed in any preceding claim wherein the initialisation unit generates a functional unit by automatic conversion (70) of a generic functional unit (60) including instruction and textual references to a dummy file, conversion being carried out by automatic deletion (74) of such references and insertion of specific file references using text processing steps.

7. A method as claimed in any preceding claim wherein flag settings for the event log are connected to the input of a logic gate (55) for outputting a fault log setting command when a flag is set for all events of an event set.

## Patentansprüche

1. Fehlervermeidungsverfahren durchgeführt in einem Computersystem, das eine Mehrzahl von Funktionseinheiten (3-7) gespeichert in einer nichtflüchtigen Speichereinrichtung aufweist und einen Code zum Leiten von Operationen auf niedriger Systemebene umfasst, wobei das System weiter ein Steuermittel für Fehlervermeidung aufweist, **dadurch gekennzeichnet, dass** das genannte Steuermittel eine Mehrzahl von Steuereinheiten (8-12) und eine Initialisierungseinheit aufweist, und das Verfahren die Schritte einer Steuereinheit aufweist:
Codes zu speichern, die sie in einem Verhältnis von eins zu eins mit einer bestimmten Funktionseinheit verknüpfen;
eine Aktivierungsanweisung für die verknüpfte Funktionseinheit zu erhalten (31);
automatisch mit einer Funktionseinheitsaktivierungsanforderung verknüpfte Hardwareinitialisierungsparameter zu ermitteln (32), die von einer Benutzerschnittstelle durch Bezugnahme auf einen Satz (20) von in einem Datensatz gespeicherten Bezugshardwareschaltungsparametern empfangen werden;
automatisch die Quelle einer Anforderung zur Aktivierung der verknüpften Funktionseinheit durch Bezugnahme auf einen gespeicherten Datensatz (21) von Zugangsparametern zu ermitteln (33);
die verknüpfte Funktionseinheit erst nach automatischer Durchführung einer Rückkehroperation (40) zu aktivieren (41), die die folgenden Unterschritte umfasst:
Eintragungen in einem Fehlerkontrollprotokoll (23) zur Bestimmung zu lesen, ob alle durch die vorhergehend betätigte Funktionseinheit durchgeführten Ereignisse eine gespeicherte Zusageanzeige aufweisen, die anzeigt, dass ein eingestelltes Ereignis in einer unterbrechungsfreien Weise durchgeführt wurde; und
die vorhergehend aktivierte Funktionseinheit wieder zu aktivieren, wenn alle Zusageanzeigen nicht ermittelt werden;
das Fehlerkontrollprotokoll während der Operation seiner verknüpften Funktionseinheit zu aktualisieren durch Kontrollieren (42) von Datenereignisdurchführung und durch:
Bestimmen (43(b)), ob ein Ereignis korrekt ausgeführt ist und Wiederversuche zu leiten, wenn dies nicht der Fall ist,
Setzen (43(f)) einer Anzeige in einem Ereignisprotokoll (22), wenn ein Ereignis korrekt durchgeführt wird;
Bestimmen (43(g)), wann alle Ereignisse eines Ereignissatzes vollständig sind, und
Setzen (43(h)) einer Anzeige in dem Fehlerkontrollprotokoll, wenn der Ereignissatz vollständig ist; und
Aktivieren (48) einer nächsten Funktionseinheit, die sich in einer ermittelten betriebsmäßigen sequentiellen Reihenfolge von der verknüpften Funktionseinheit befindet.

2. Verfahren nach Anspruch 1, bei dem jede Steuereinheit bestimmt, wann alle Ereignisse eines Ereignissatzes vollständig sind durch Prüfen des Werts eines Zählers in dem Ereignisprotokoll (22), wobei der genannte Zähler nach erfolgreicher Ausführung jedes Ereignisses inkrementiert wird.

3. Verfahren nach einem vorhergehenden Anspruch, bei dem jede Steuereinheit automatisch einen Systemfehler vor Aktivierung einer nächsten Funktionseinheit ermittelt (47).

4. Verfahren nach Anspruch 3, bei dem jede Steuereinheit automatisch eine Zusagegrenze (49) abruft und eine Sequenz von vorhergehend betätigten Funktionseinheiten für Systemfehlerrückkehr gemäß der Zusagegrenze reaktiviert.

5. Verfahren nach Anspruch 4, bei dem jede Steuereinheit automatisch ein Fehlersignal für eine Ausgabeschnittstelle erzeugt (43(d)), wenn ein Ereignis nicht korrekt ausgeführt ist, und es einen Code speichert, der anzeigt, dass Wiederversuch nicht gestattet ist.

6. Verfahren nach einem vorhergehenden Anspruch, bei dem die Initialisierungseinheit eine Funktionseinheit durch automatische Umwandlung (70) einer generischen Funktionseinheit (60) erzeugt, die Anweisungs- und Textverweise zu einer Blinddatei einschließt, wobei die Umwandlung durch automatische Löschung (74) solcher Verweise und Einführung spezieller Dateiverweise unter Verwendung von Textverarbeitungsschritten durchgeführt wird.

7. Verfahren nach einem vorhergehenden Anspruch, bei dem Anzeigesetzen für das Ereignisprotokoll mit dem Eingang eines logischen Gatters (55) zum Ausgeben eines Fehlerprotokolleinstellbefehls verbunden ist, wenn eine Anzeige für alle Ereignisse eines Ereignissatzes gesetzt wird.

## Revendications

1. Méthode de prévention d'erreurs effectuée dans un système infonnatique comprenant une pluralité d'unités fonctionnelles (3-7) stockées dans un dispositif de mémoire rémanente et ayant du code pour diriger des opérations systèmes de bas niveau, le système comprenant aussi un moyen de contrôle pour la prévention d'erreurs, **caractérisée en ce que** ledit moyen de contrôle comprend une pluralité d'unités de contrôle (8-12) et une unité d'initialisation, et la méthode comprend les étapes d'une unité de contrôle :
stocker des codes qui l'associent selon une relation bi-univoque à une unité fonctionnelle particulière;
recevoir (31) une instruction d'activation pour l'unité fonctionnelle associée;
vérifier automatiquement (32) des paramètres d'initialisation matérielle associés à une requête d'activation d'unité fonctionnelle reçue d'une interface utilisateur par référence à un ensemble (20) de paramètres de référence de circuit matériel stockés dans un ensemble de données;
vérifier automatiquement (33) la source d'une requête d'activation de l'unité fonctionnelle associée par référence à un ensemble de données stocké (21) de paramètres d'accès;
activer (41) l'unité fonctionnelle associée seulement après avoir exécuté automatiquement une opération de reprise (40) ayant les sous-étapes suivantes :
lire des entrées dans un journal de contrôle de fautes (23) afin de déterminer si tous les événements implémentés par l'unité fonctionnelle précédemment opérationnelle ont un indicateur de validation stocké indiquant qu'un ensemble d'événements a été implémenté d'une manière atomique; et
réactiver l'unité fonctionnelle activée précédemment si tous les indicateurs de validation ne sont pas détectés;
actualiser le journal de contrôle de fautes pendant le fonctionnement de son unité fonctionnelle associée en surveillant (42) l'implémentation de données d'événement et :
en déterminant (43(b)) si un événement est correctement implémenté et en dirigeant des relances s'il ne l'est pas;
en réglant (43(f)) un indicateur dans un journal d'événements (22) si un événement est implémenté correctement,
en déterminant (43(g)) quand tous les événements d'un ensemble d'événements sont complets, et
en réglant (43(h)) un indicateur dans le journal de contrôle de fautes lorsque l'ensemble d'événements est complet; et
activer (48) une unité fonctionnelle suivante qui est dans un ordre opérationnel séquentiel vérifié de l'unité fonctionnelle associée.

2. Méthode telle que revendiquée dans la revendication 1 dans laquelle chaque unité de contrôle détermine quand tous les événements d'un ensemble d'événements sont complets en surveillant la valeur d'un compteur dans le journal d'événements (22), ledit compteur étant incrémenté lors de l'implémentation réussie de chaque événement.

3. Méthode telle que revendiquée dans l'une quelconque des revendications précédentes dans laquelle chaque unité de contrôle détecte automatiquement (47) une faute système avant qu'une unité fonctionnelle suivante ne soit activée.

4. Méthode telle que revendiquée dans la revendication 3, dans laquelle chaque unité de contrôle extrait automatiquement une limite de validation (49) et réactive une séquence d'unités fonctionnelles utilisées précédemment pour une reprise de faute système conformément à la limite de validation.

5. Méthode telle que revendiquée dans la revendication 4, dans laquelle chaque unité de contrôle génère automatiquement (43(d)) un signal d'erreur pour une interface de sortie si un événement n'est pas correctement implémenté et elle stocke du code indiquant qu'une relance n'est pas autorisée.

6. Méthode telle que revendiquée dans l'une quelconque des revendications précédentes dans laquelle l'unité d'initialisation génère une unité fonctionnelle par la conversion automatique (70) d'une unité fonctionnelle générique (60) incluant des références d'instruction et textuelle à un fichier fictif, la conversion étant exécutée par la suppression automatique (74) de telles références et l'insertion de références de fichier spécifique en utilisant des étapes de traitement de texte.

7. Méthode telle que revendiquée dans l'une quelconque des revendications précédentes dans laquelle les réglages d'indicateurs pour le journal d'événements sont connectés à l'entrée d'une porte logique (55) pour sortir une commande de réglage de journal de fautes lorsqu'un indicateur est réglé pour tous les événements d'un ensemble d'événements.
